# EUROPÄISCHE PATENTSCHRIFT

(11) **EP 0 601 975 B1**
(45) Veröffentlichungstag und Bekanntmachung des Hinweises auf die Patenterteilung: **02.06.1999**
(21) Anmeldenummer: 93810826.3
(22) Anmeldetag: 25.11.1993
(51) Int. Cl.: F16B 13/06

(54) **Ankerbolzen**
Anchor bolt
Boulon d'ancrage

(30) Priorität: 07.12.1992 CH 3744/92; 17.08.1993 CH 2450/93
(43) Veröffentlichungstag der Anmeldung: 15.06.1994
(73) Patentinhaber: MUNGO BEFESTIGUNGSTECHNIK AG, CH-4603 Olten (CH)
(72) Erfinder: Bappert, Adolf, CH-4616 Kappel (CH)
(74) Vertreter: Quehl, Horst Max, Dipl.-Ing.

(56) Entgegenhaltungen:
- EP-A- 0 019 782
- DE-A- 2 810 324
- DE-A- 3 809 403
- US-A- 3 178 990
- US-A- 4 557 631

## Beschreibung

Die Erfindung betrifft einen Ankerbolzen mit den Merkmalen des Oberbegriffs des Patentanspruchs 1.

Ankerbolzen dieser Art, bei denen eines der Bolzenelemente durch einen Schraubbolzen gebildet ist, sind bekannt durch die EP-A-0 019 782 und DE-A-2 810 324.

Durch die US-A-2 362 969, FR-A-2 335 721 und GB-A-1 534 298 sind weiterhin Ankerbolzen bekannt, bei denen das Aufspreizen durch Einschlagen eines langgestreckten Bolzenelementes erfolgt, nachdem das andere Bolzenelement in das Wandaufnahmeloch eingeschoben worden ist. Derartige Spreizdübel werden häufig für die Befestigung von Gegenständen an einer Raumdecke verwendet.

Bei Belastung der Raumdecke besteht die Gefahr, dass das den Ankerbolzen aufnehmende Loch aufgeweitet wird oder dass sogar Risse entstehen, die sich in dieses Loch hinein erstrecken, mit der Folge, dass die Verkeilung zwischen den Bolzenelementen ihre Spannung verliert und somit die Ankerbolzenbefestigung sich lösen kann.

Der Erfindung liegt die Aufgabe zugrunde, den genannten Nachteil bekannter Ankerbolzen zu vermeiden und somit einen Ankerbolzen zu finden, der eine verbesserte Befestigung gewährleistet. Dabei soll diese Verbesserung durch einen leicht herstellbaren und leicht zu montierenden Ankerbolzen erreichbar sein. Die Lösung dieser Aufgabe erfolgt erfindungsgemäss aufgrund der kennzeichnenden Merkmale des Patentanspruchs 1.

Vorteilhafte Ausführungsformen der Erfindung, die Gegenstand der abhängigen Patentansprüche sind, werden im folgenden anhand der Zeichnungen beschrieben. Es zeigen:
- Fig.1: einen Axialschnitt durch einen unverspannten Ankerbolzen mit unterschiedlicher Länge der Spreizschenkel, in Anwendungsposition
- Fig.2: den Ankerbolzen nach Fig.1 in verspanntem Zustand,
- Fig.3: einen Axialschnitt durch eines der Bolzenelemente des Ankerbolzens nach Fig.1,
- Fig.4: eine Ansicht auf den Kopf des Bolzenelementes nach Fig.1,
- Fig. 5: eine Abwicklung des zweiten Bolzenelementes des Ankerbolzens nach Fig.1,
- Fig. 6: einen Axialschnitt durch das zweite Bolzenelement des Ankerbolzens nach Fig.1,
- Fig.7: eine Ansicht gegen das Spreizende des Bolzenelementes nach Fig. 6,
- Fig.8: einen Axialschnitt durch eine Ausführungsform eines unverspannten Ankerbolzens mit einem zusätzlichen Eintreibschaft,
- Fig.9: eine Aufsicht auf den Ankerbolzen nach Fig.8
- Fig. 10: einen Axialschnitt durch den Ankerbolzen nach Fig.8 in verspanntem Zustand,
- Fig.11: eine Seitenansicht eines Bolzenelementes des Ankerbolzens nach Fig.8,
- Fig.12: eine Aufsicht auf das Bolzenelement nach Fig.11,
- Fig.13: einen Querschnitt durch ein zweites Bolzenelement des Ankerbolzens nach Fig.8,
- Fig.14: eine Ansicht gegen das Spreizende des Bolzenelementes nach Fig.13,
- Fig.15: eine Abwicklung des Bolzenelementes nach Fig.13,
- Fig.16: eine Seitenansicht des Eintreibschaftes des Ankerbolzens nach Fig.8,
- Fig.17: eine weitere Seitenansicht des Eintreibschaftes nach Fig.16,
- Fig.18: einen Axialschnitt im Spreizbereich eines unverspannten Ankerbolzens mit gleichlangen Spreizschenkeln und unsymmetrischem Spreizkonus,
- Fig.19: den Spreizbereich nach Fig.18 bei verspanntem Ankerbolzen.
- Fig.20: eine weitere Ausführungsform eines erfindungsgemä ssen, in ein Bohrloch eingesetzten Ankerbolzens in unverspanntem Zustand,
- Fig.21: den Ankerbolzen nach Fig.20 in verspanntem Zustand,
- Fig.22: das innere Bolzenelement des Ankerbolzens nach Fig.21,
- Fig.23: einen Querschnitt durch das Bolzenelement nach Fig.22 entlang der Linie XXIII - XXIII,
- Fig.24: eine weitere Ansicht des Bolzenelementes nach Fig.22, im Bereich seines Spreizkonusses,
- Fig.25: eine Aufsicht auf das äussere, kragenartige Bolzenelement des Ankerbolzens nach Fig. 20 und 21,
- Fig.26: eine Abwicklung des Bolzenelementes nach Fig.25,
- Fig.27: einen Längsschnitt durch das Bolzenelement nach Fig.25
- Fig.28: eine Seitenansicht des äusseren Bolzenelementes nach Fig.25,
- Fig.29: einen Querschnitt entlang der Linie XXIX-XXIX der Fig.30,
- Fig.30: eine Seitenansicht des vorderen Endes des Ankerbolzens nach Fig.20 und 21, mit Schnittdarstellung seines äusseren Bolzenelementes,
- Fig.31: einen Querschnitt durch einen weiteren erfindungsgemässen Ankerbolzen in unverspanntem Zustand,
- Fig.32: den Ankerbolzen nach Fig.31 in verspanntem Zustand
- Fig.33: eine Aufsicht auf den Ankerbolzen nach Fig.31,
- Fig.34: eine Aufsicht auf den Haltering des Ankerbolzens nach Fig.31 und 32,
- Fig.35: eine Abwicklung des äusseren Bolzenelementes des Ankerbolzens nach Fig.31 und 32,
- Fig.36: einen parallel zu den Schlitzebenen geführten Längsschnitt durch das äussere Bolzenelement des Ankerbolzens nach Fig.31 und 32,
- Fig.37 und Fig.38: Seitenansichten des inneren Bolzenelementes des Ankerbolzens nach Fig.31 und 32,
- Fig. 39: eine Ansicht gegen das vordere Ende des äusseren Bolzenelementes nach Fig.36,
- Fig.40: eine Ansicht gegen das hintere Ende des Bolzenelementes nach Fig.36,
- Fig.41: eine Ansicht gegen das vordere Ende des inneren Bolzenelementes nach Fig.37 und
- Fig.42: eine Ansicht gegen das hintere Ende des inneren Bolzenelementes nach Fig.37.

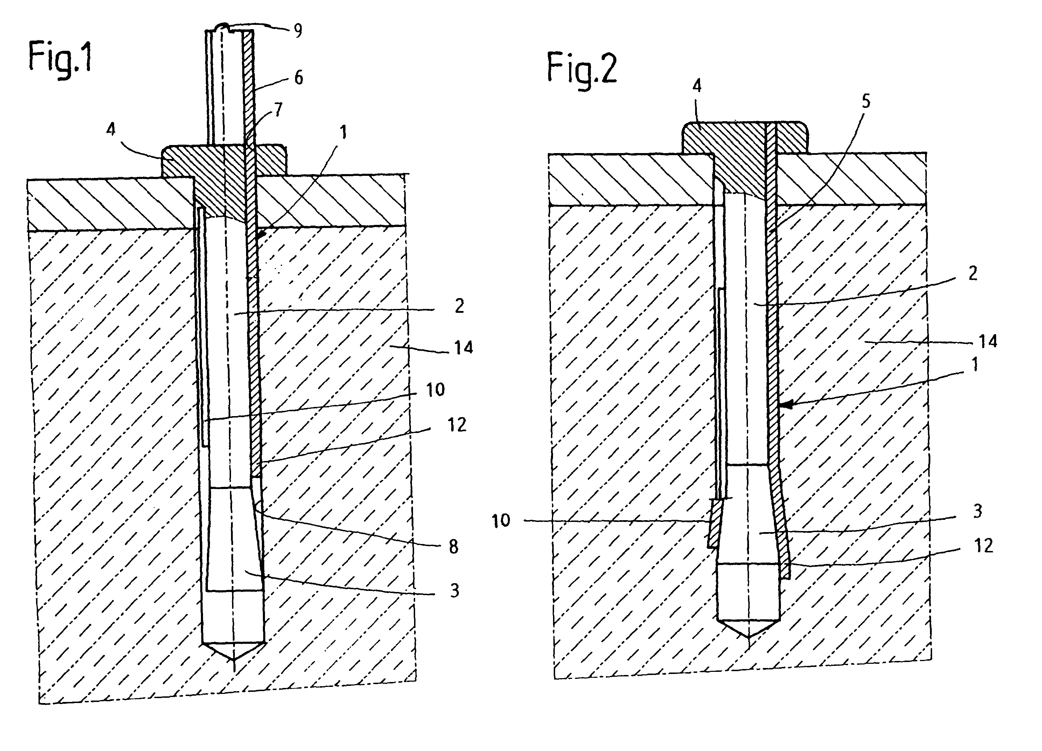

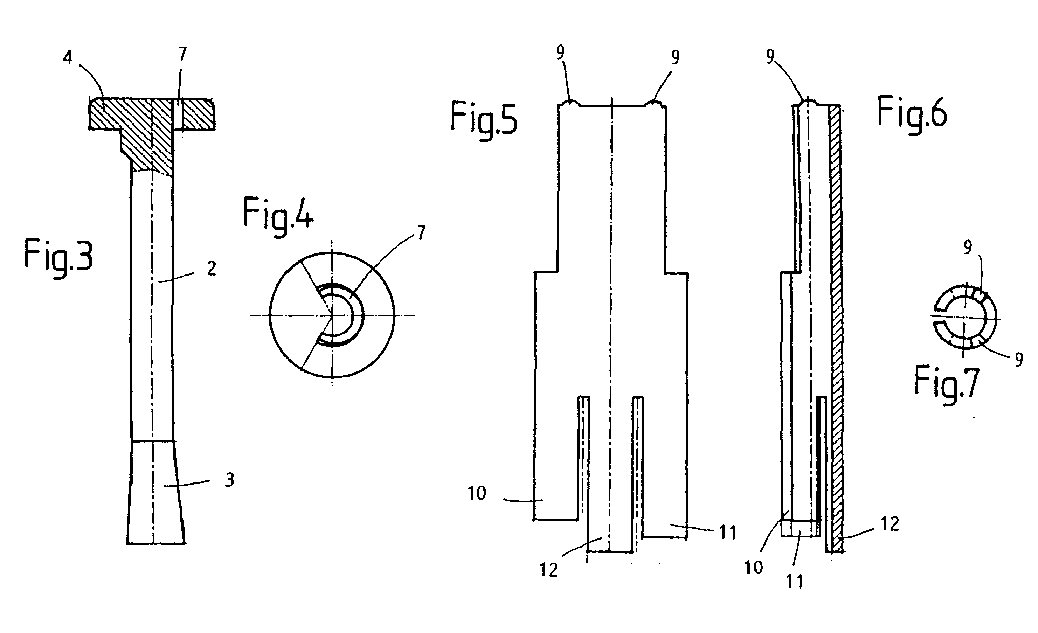

Der Ankerbolzen 1 des Ausführungsbeispieles der Fig.1 bis 7 ist zweiteilig. Ein erstes, inneres Bolzenelement 2 des Ankerbolzens 1 hat an seinem vorderen Ende einen unsymmetrischen Spreizkonus 3 und an seinem hinteren Ende einen als Befestigungselement dienenden Flansch 4. Das zweite, äussere Bolzenelement 5 bildet einen unvollständig geschlossenen Hülsenkörper, der das erste Bolzenelement 2 umschliesst.

Im unverspannten Zustand ragt das hintere Ende 6 des zweiten Bolzenelementes 5 über den Flansch 4 hinweg in Längsrichtung des Ankerbolzens 1 nach aussen. Hierzu ist in dem Flansch 4 eine Oeffnung 7 vorgesehen, deren Form der Querschnittsform des äusseren Bolzenelementes 5 entspricht. Um die Verspannung im Bohrloch 8 herzustellen, wird das zweite bzw. äussere Bolzenelement 5 durch Schläge auf sein Ende 6 weiter in das Bohrloch 8 eingetrieben, so dass es die in Fig.2 gezeigte, verspannte Position einnimmt. Die Deformation einer oder mehrerer kleiner Erhebungen 9 am Ende 6 des äusseren Bolzenelementes 5 zeigt an, dass eine ausreichende Verspannung durch Aufspreizen der Spreizschenkel 10 bis 12 in Kontakt mit dem Konus 3 erfolgt ist.

Beim Eintreiben des äusseren Bolzenelementes 5, ausgehend von der Anordnung nach Fig.1, gelangt zuerst der längste Spreizschenkel 12 in Kontakt mit dem stärker abgeschrägten Umfangsbereich 13 des Konus 3, so dass auf das vordere Ende des inneren Bolzenelements 2, das von dem äusseren Bolzenelement 5 umfasst ist, eine Biegekraft ausgeübt wird. Nach weiterem Eintreiben des äusseren Bolzenelementes 5 werden auch die dem längsten Spreizschenkel 12 schräg gegenüberliegenden, kürzeren Spreizschenkel 10 und 11 gespreizt und nehmen eine der genannten Biegekraft entgegenwirkende kleinere Kraft auf, so dass am Ende des inneren Bolzenelementes eine Biegeverspannung verbleibt. Durch diese Biegespannung wird verhindert, dass sich bei Aufweitung des Bohrloches 8 infolge von Biegespannungen oder Rissen in dem das Bohrloch 8 umgebenden Baumaterial 14 der Spreizeingriff des Ankerbolzens 1 nicht lokkert. Durch die am vorderen Bereich des Ankerbolzens 1 wirkenden unsymmetrischen Spreizkräfte erfolgt auch ein verbesserter Eingriff des Ankerbolzens 1 im Baumaterial 14.

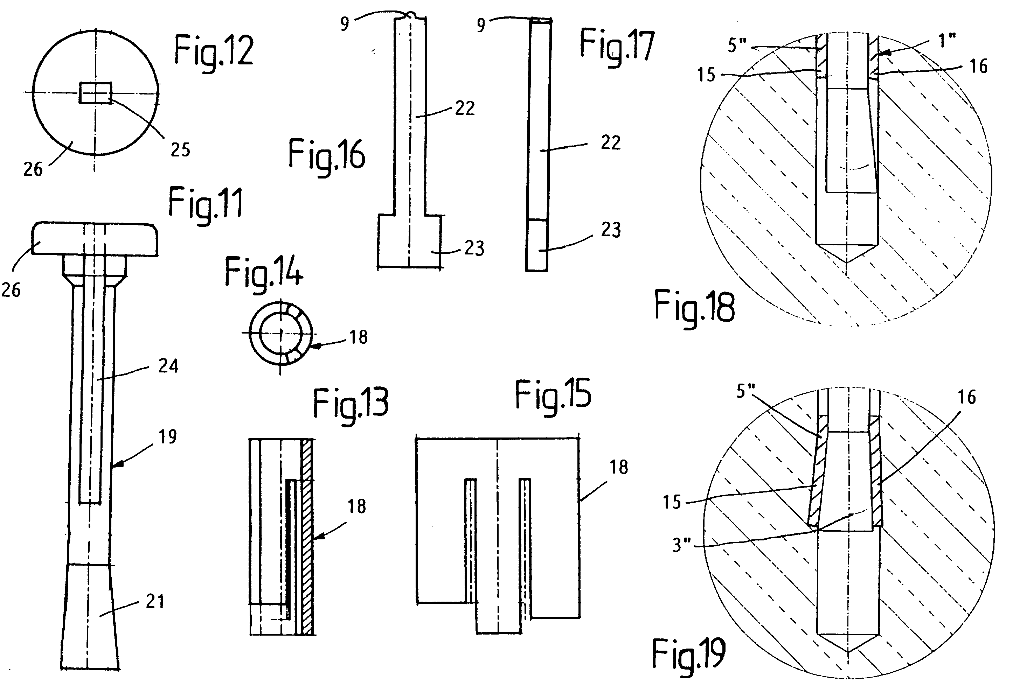

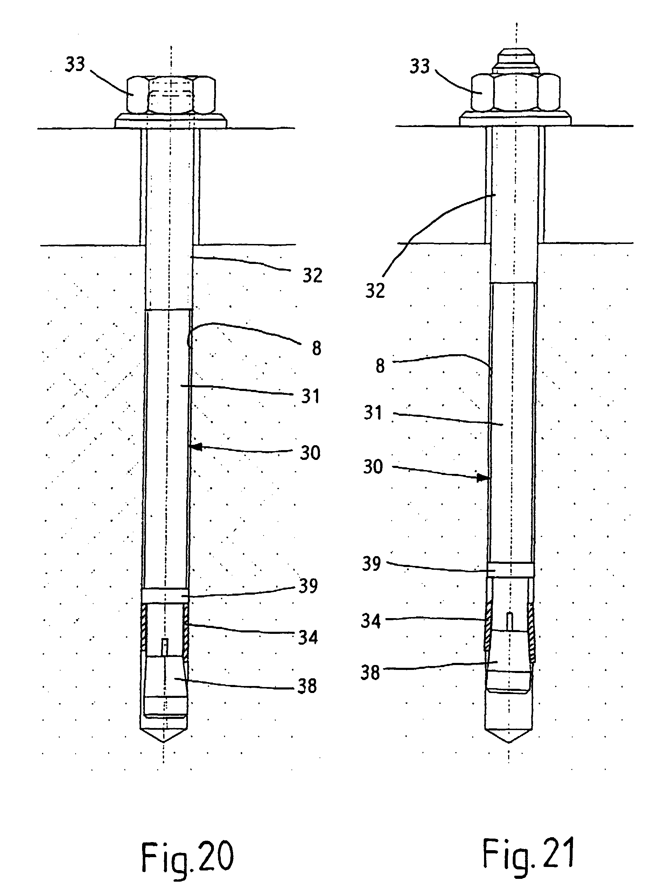

Die Darstellungen der Fig.18 und 19 zeigen, dass ein erfindungsgemässer Ankerbolzen 1" auch mit gleichlangen Spreizschenkeln 15,16 des umschliessenden Bolzenelementes 5" ausgeführt sein kann. Die unsymmetrische, eine Biegespannung bewirkende Ausführung im Spreizbereich wird hierbei allein durch einen unsymmetrisch ausgeführten Konus 3" erreicht. Da sich in verspanntem Zustand der Konus zwischen den Spreizschenkeln 15,16 zentriert, wird dieser biegeelastisch verformt. Dies veranschaulicht ein Vergleich zwischen den Darstellungen der Fig. 18 und 19.

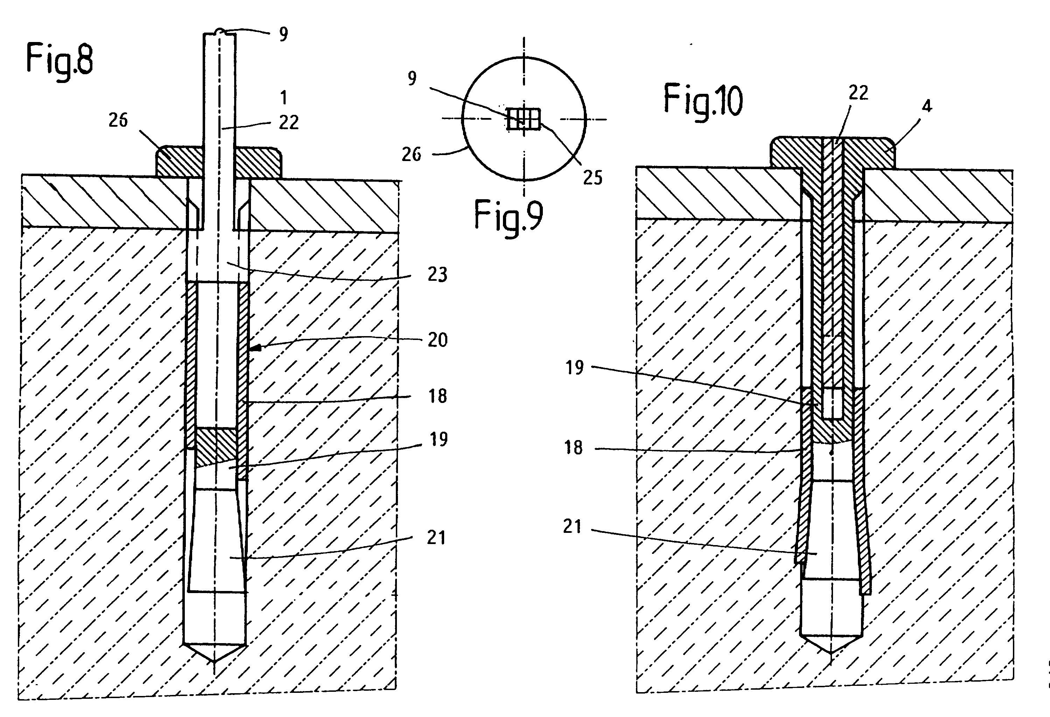

Das Ausführungsbeispiel der Erfindung nach Fig.8 bis 17 unterscheidet sich von demjenigen nach Fig.1 bis 7 dadurch, dass das umschliessende Bolzenelement 18 sich nur über weniger als der Hälfte der Länge des eingeschlossenen Bolzenelementes 19 bzw. nur im Spreizbereich des Ankerbolzens 20 erstreckt. Das Eintreiben dieses kurzen Bolzenelementes 18 zur Aufspreizung über dem Konus 21 erfolgt durch einen zusätzlichen Eintreibschaft 22, dessen breiteres, vorderes Ende 23 an dem hinteren Ende des hülsenförmigen, äusseren Bolzenelementes 18 anliegt. Hierzu hat das den Konus 21 aufweisende Bolzenelement 19 für den Eintreibschaft 22 einen beidseitig offenen Führungskanal, der mit einer der Querschnittsform des Eintreibschaftes 22 angepassten Oeffnung 25 im Flansch 26 des Bolzenelementes 19 beginnt. Für die Vormontage des Ankerbolzens 20 lässt sich der Eintreibschaft seitlich in den Führungskanal 24 einschieben. Durch anschliessendes Aufwärtsschieben durch die Oeffnung 25 hindurch, nimmt der Eintreibschaft 22 die in Fig.8 gezeigte Position ein. Das äussere Bolzenelement 18 wird anschliessend, ausgehend von dem Blechzuschnitt nach Fig.15, um das Bolzenelement 19 herumgebogen.

Falls zwei äussere Bolzenelemente ein inneres zwischen sich einschliessen, so sind diese vorzugsweise miteinander verbunden, so dass die zum Aufspreizen erforderliche Ausrichtung zueinander nicht erst beim Einsetzen in das Bohrloch erfolgen muss. Anstatt eines Flansches als Befestigungsbereich durch den hindurch sich das mindestens eine andere Bolzenelement erstreckt, kann der Befestigungsfortsatz sich auch nach nur einer Seite hin hakenförmig erstrecken. Weiterhin kann ein Befestigungsbereich auch an jedem der Bolzenelemente vorgesehen sein, wie es an sich durch die US-A-2362969 bekannt ist.

Beim Ausführungsbeispiel eines Ankerbolzens 30 nach Fig.20 bis 30 besteht der Befestigungsbereich am ersten, inneren, langgestreckten Bolzenelement 31 aus einem Schraubengewinde 32, auf das eine Schraubenmutter 33 aufgeschraubt ist. Das zweite, äussere Bolzenelement 34 erstreckt sich manschettenartig artig nur über einen kurzen Teil des langgestreckten Bolzenelementes 31. Es liegt mit seinen drei unterschiedlich langen Schenkeln 35,36,37 einerseits an dem unsymmetrischen Spreizkonus 38an und stützt sich anderseits an einem umlaufenden Absatz 39 des inneren Bolzenelemntes 31 ab, durch den es beim Einschieben des Ankerbolzens 30 in ein Bohrloch 8 seine Position am vorderen Ende des Ankerbolzens 30 beibehält. Beim Anziehen der Schraubenmutter 33 wirken widerhakenartige Erhebungen 40 bis 43 an dem äusseren Bolzenelement 34 dem Herausziehen des Ankerbolzens 30 aus dem Bohrloch 8 entgegen, und es wird durch den Spreizkonus 38 ungleichförmig aufgespreizt, so dass der Ankerbolzen 30 sich fest im umgebenden Baumaterial 14 verankert.

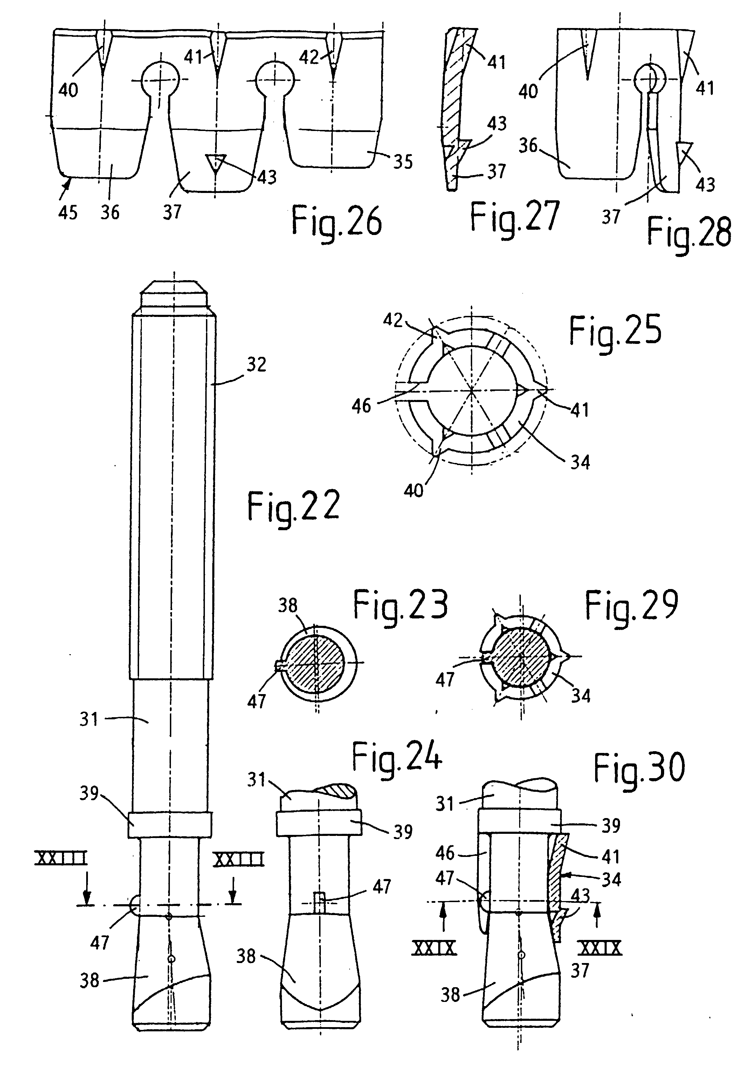

Die Verbindung zwischen dem inneren, gewindeschaftförmigen Bolzenelement 31 und dem äussere Bolzenelement 34 erfolgt, indem letzteres ausgehend von dem ausgestanzten und geprägten Blechstück 45 nach Fig.26 um das vordere Ende des inneren Bolzenelementes 31 herumgebogen wird, so dass es die Form einer einen durchgehenden Längsschlitz 46 aufweisenden Hülse einnimmt. In den Längsschlitz 46 dieses Bolzenelementes 34 greift zur Sicherung der relativen Positionen zwischen den Spreizschenkeln 35 bis 37 und dem unsymmetrischen Spreizkonus 38 eine im vorderen Bereich des inneren Bolzens 31 angeformte Nase 47 ein.

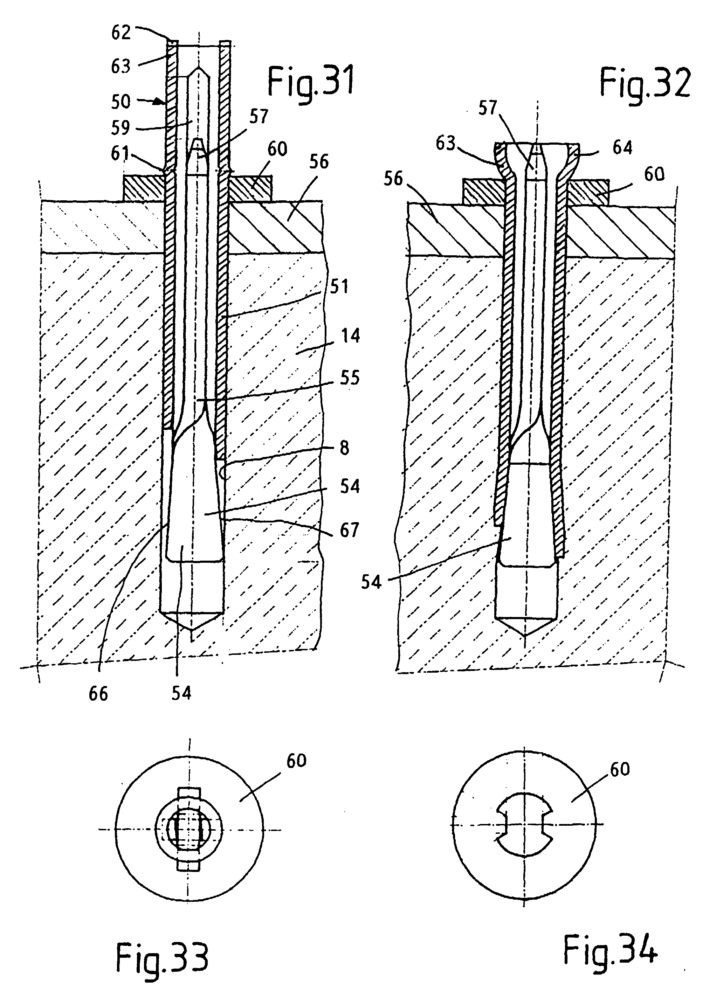

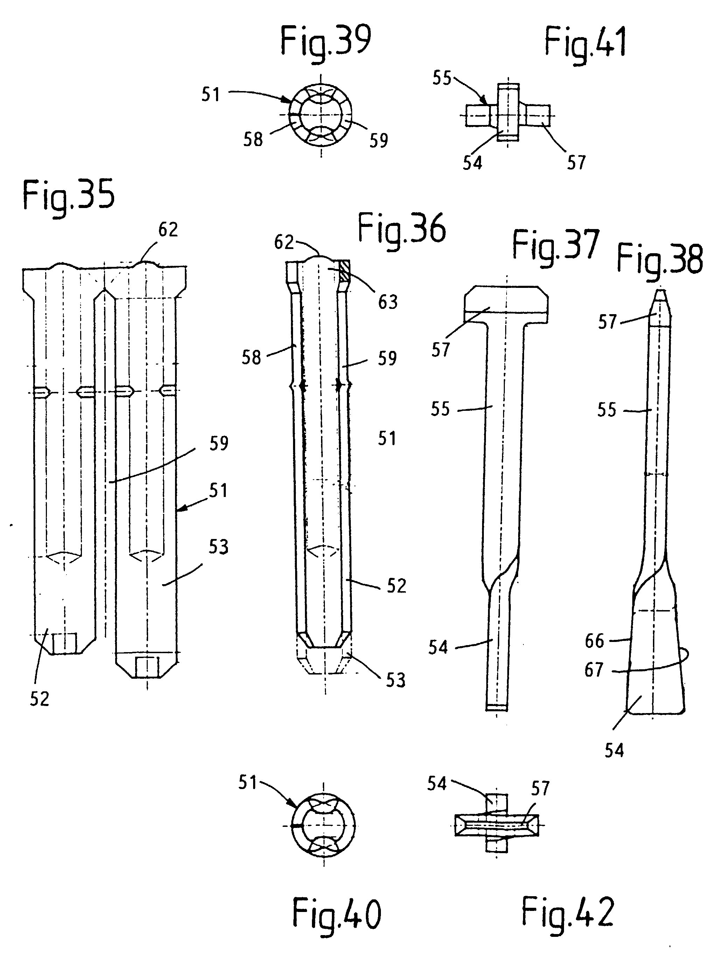

Beim Ausführungsbeispiel eines Ankerbolzens 50 nach Fig.31 bis 42 erfolgt die Aufspreizung wie bei den Ausführungsbeispielen der Fig.1 bis 19 durch Einschlagen des äusseren Bolzenelementes 51, so dass sich dessen beide Spreizschenkel 52, 53 über einem keilförmigen, unsymmetrischen Spreizkörper 54 eines inneren Bolzenelementes 55 aufspreizen, so dass sie das innere Bolzenelement 55 ausgehend von der Position nach Fig. 31 in eine Biegeposition nach Fig.32 drängen.

Für die Befestigung eines Gegenstandes, beispielsweise einer Wandplatte 56 an dem Baumaterial 14 hat das innere, aus einem Flachstahl geformte Bolzenelement 55 einen T-förmig verbreiterten Kopf 57, der sich quer durch zwei einander gegenüberliegende, die Spreizschenkel 52,53 bildende Schlitze 58,59 des äusseren Bolzenelementes 51 erstreckt und der auf einem beide Bolzenelemente 51 und 55 umschliessenden Haltering 60 aufliegt.

Vor Einsetzen des Ankerbolzens 50 in das Bohrloch 8 und in der unverspannten Ausgangsposition nach Fig.31 wird das äussere Bolzenelement durch kleine Erhebungen 61 am Haltering 60 gehalten, so dass sein vorzeitige Aufspreizen am Spreizkörper 54 verhindert wird. Beim Eintreiben des äusseren Bolzenelementes 51 durch Hammerschläge auf sein kleine Erhebungen 62 hinteres Ende 63 wird diese Halterung an den Erhebungen 61 überwunden, und die Enden der Spreizschenkel 52,53 gleiten über den keilförmigen Spreizkörper 54 des inneren Bolzenelementes 55 sich spreizend in die in Fig.32 gezeigte Position nach aussen. Dabei weitet sich das hintere Ende 63 des äusseren Bolzenelementes 51 auf. Diese Aufweitung wird unterstützt durch den Kontakt mit dem von ihm eingeschlossenen, sich keilförmig nach oben verjüngenden Kopf 57 des inneren Bolzenelementes 55. Die sich ergebende pilzartige Aufweitung 64 des äusseren bolzenelementes 51 bewirkt zusammen mit dem den Haltering 60 übergreifenden Kopf 57 des inneren Bolzenelementes 55 eine sichere Befestigung der Wandplatte 56 durch den somit an sie gepressten Haltering 60.

Auch dieser Ankerbolzen 50 nach Fig.31 bis 42 lässt sich besonders leicht durch Ausstanzen und Biegeverformen von Stahlblechteilen herstellen. Der keilförmige Spreizkörper 54 wird dabei nach dem Ausstanzen durch eine Torsionsverformung um 90° gegenüber dem Kopf 57 mit seinen Keilflächen 66,67 in eine den Spreizschenkeln 52,53 des äusseren Bolzenelementes 51 gegenüberliegende Position gebracht.

## Patentansprüche

1. Ankerbolzen mit mindestens zwei Bolzenelementen (2,5; 18, 19), von denen mindestens eines im vorderen Bereich des Ankerbolzens (1,20,30,50) mit mindestens einer Keil- oder Konusmantelfläche (3,3") in Spreizkontakt mit einem anderen Bolzenelement (2,5;18,19,34,51) steht, welche Fläche(n) in Richtung zum vorderen Ankerbolzenende hin nach aussen verläuft bzw. verlaufen, wobei mindestens eines der Bolzenelemente das andere hülsenartig umfasst und mindestens eines dieser Bolzenelemente (2,19,31,51,55) einen zur formschlüssigen Verbindung mit einem zu befestigenden Gegenstand bestimmten Befestigungsfortsatz (4,26,32,33,57,64) aufweist, dadurch gekennzeichnet, dass durch eine unsymmetrische Ausführung der Keil- oder Konusmantelfläche und/oder durch eine unterschiedliche Länge von Spreizschenkeln (10-12:35-37;52,53) mindestens eines hülsenartig umfassenden Bolzenelementes (5,18,34, 51) das innere Ankerbolzenelement (2,19) infolge der unsymmetrischen Beanspruchung unter Biegespannung steht.

2. Ankerbolzen nach Anspruch 1, dadurch gekennzeichnet, dass am umfassten, inneren Ankerbolzenelement (2,19) zwei Keilflächen vorgesehen sind, die sich auf radial einander gegenüberliegenden Seiten des Bolzenelementes (2,19) befinden.

3. Ankerbolzen nach Anspruch 1 oder 2, dadurch gekennzeichnet, dass der Befestigungsfortsatz (4,26) an dem inneren Bolzenelement (2,19) vorgesehen ist und als zum Uebergreifen eines zu befestigenden Gegenstandes bestimmter, am freien, hinteren Ankerbolzenende vorgesehener Flansch (4) ausgebildet ist, wobei sich das mindestens eine äussere Bolzenelement (5) durch eine Oeffnung (7) in diesem Flansch erstreckt.

4. Ankerbolzen nach Anspruch 1 oder 2, dadurch gekennzeichnet, dass das innere Bolzenelement (19) einen zum hinteren Ankerbolzenende hin offenen, in Ankerbolzenlängsrichtung verlaufenden Führungskanal (24) aufweist, der einen Eintreibschaft (22) umschliesst, der mindestens einen seitlichen Fortsatz (23) aufweist, der am hinteren Ende eines eingetriebenen, äusseren Bolzenelementes (18) anliegt.

5. Ankerbolzen nach einem der Ansprüche 1 bis 4, dadurch gekennzeichnet, dass an dem hinteren Ende eines zum Aufspreizen des Ankerbolzens (1) in das Bohrloch einzuschlagenden, äusseren Bolzenelementes (5,51) oder eines Eintreibschaftes (22) mindestens eine durch das Einschlagen deformierbare Erhebung (9,62) vorgesehen ist.

6. Ankerbolzen nach Anspruch 1, dadurch gekennzeichnet, dass das innere Bolzenelement (55) einen T-förmig verbreiterten Kopf (57) hat, der sich seitlich durch zwei einander gegenüberliegende, zum hinteren Ende des Ankerbolzens (50) hin begrenzte Schlitze (58,59) im äusseren Bolzenelement (51) erstreckt und der einen beide Bolzenelemente (51,55) umschliessenden Haltering (60) übergreift.

7. Ankerbolzen nach Anspruch 6, dadurch gekennzeichnet, dass sich das äussere Bolzenelement (51) durch kleine Erhebungen (61) in einer Ausgangsposition vor Beginn der Aufspreizung an dem Haltering (60) abstützt.

8. Ankerbolzen nach Anspruch 1, dadurch gekennzeichnet, dass das innere Bolzenelement (55) aus einem ausgestanzten Flachstahlstück besteht und an seinem vorderen Ende einen um 90° tordierten, keilförmigen und unsymmetrischen Spreizkörper (54) aufweist.

9. Ankerbolzen nach Anspruch 1, dadurch gekennzeichnet, dass das innere Bolzenelement (31) an seinem Befestigungsfortsatz ein Schraubgewinde (32) und eine auf dieses aufgeschraubte Schraubenmutter (33) aufweist, wobei das äussere Blzenelement (34) das innere manschettenartig umschliesst, sich an einem Absatz (39) des inneren Bolzenelementes (31) abstützt und aussen widerhakenartige Erhebungen (40-43) aufweist.

## Claims

1. Anchor bolt with at least two bolt elements (2, 5; 18, 19), whereof at least one is in expanding contact with another bolt element (2, 5; 18, 19, 34, 51) in the front area of the anchor bolt (1, 20, 30, 50) with at least one conical surface (3, 3"), said surface or surfaces passing outwards in the direction of the front anchor bolt end, at least one of the bolt elements surrounding the other in sleeve-like manner and at least one of said bolt elements (2, 19, 31, 51, 55) has a fixing extension (4, 26, 32, 33, 57, 64) for positive connection to an object to be fixed, characterized in that through an asymmetrical construction of the conical surface and/or by a differing length of the expanding legs (10-12; 35-37; 52, 53), at least one bolt element (5, 18, 34, 51) surrounding in sleeve-manner the inner anchor bolt element (2, 19) is under bending stress as a result of the asymmetrical stressing action.

2. Anchor bolt according to claim 1, characterized in that on the surrounded, inner anchor bolt element (2, 19) are provided two wedge surfaces, which are located on radially facing sides of the bolt element (2, 19).

3. Anchor bolt according to claim 1 or 2, characterized in that the fixing extension (4, 26) is located on the inner bolt element (2, 19) and is constructed as a flange (4), located on the free, rear anchor bolt end, for engaging over an object to be fixed, the at least one outer bolt element (5) extending through an opening (7) in said flange.

4. Anchor bolt according to claim 1 or 2, characterized in that the inner bolt element (19) has a guide channel (24) running in the anchor bolt longitudinal direction and open towards the rear anchor bolt end, which surrounds a driving-in shank (22), which has at least one lateral extension (23), which engages on the rear end of a driven-in, outer bolt element (18).

5. Anchor bolt according to one of the claims 1 to 4, characterized in that on the rear end of a driving-in shank (22) or an outer bolt element (5, 51) to be driven into the drill hole for expanding the anchor bolt (1) is provided at least one protuberance (9, 62) deformable by the driving in action.

6. Anchor bolt according to claim 1, characterized in that the inner bolt element (55) has a head (57) widened in T-shaped manner and which extends laterally through two facing slots (58, 59), bounded towards the rear end of the anchor bolt (50), in the outer bolt element (51) and which engages over a holding ring (60) surrounding both bolt elements (51, 55).

7. Anchor bolt according to claim 6, characterized in that the outer bolt element (51) is supported in its starting position by small protuberances (61) prior to the start of expansion on the holding ring (60).

8. Anchor bolt according to claim 1, characterized in that the inner bolt element (55) comprises a punched flat steel bar and has on its front end a wedge-shaped, asymmetrical expanding member (54) twisted by 90°.

9. Anchor bolt according to claim 1, characterized in that the inner bolt element (31) has on its fixing extension a screwed shank (32) and a lock nut (33) screwed onto the latter, the outer bolt element (34) surrounding the inner element in cuff-like manner, is supported on a shoulder (39) of the inner bolt element (31) and is externally provided with barb-like protuberances (40 to 43).

## Revendications

1. Boulon d'ancrage possédant au moins deux éléments de boulon (2, 5 ; 18, 19) dont l'un au moins se trouve en contact d'expansion avec un autre élément de boulon (2,5 ; 18, 19, 34, 51) avec au moins une surface d'enveloppe de coin ou de cône (3, 3") dans la partie antérieure du boulon d'ancrage (1, 20, 30, 50), laquelle surface (ou surfaces) est orientée vers l'extérieur en direction de l'extrémité antérieure du boulon d'ancrage, l'un au moins des éléments de boulon entourant l'autre à la manière d'une douille et l'un au moins de ces éléments de boulon (2, 19, 31, 51, 55) présentant une saillie de fixation (4, 26, 32, 33, 57, 64) destinée à une liaison par engagement positif avec un objet à fixer, caractérisé en ce qu'une construction asymétrique de la surface de cône ou de coin et/ou une différence de longueur entre les bras d'expansion (10-12 ; 35-37 ; 52, 53) de l'un au moins des éléments de boulon enveloppant à la manière d'une douille (5, 18, 34, 51) permet d'exercer une contrainte de flexion sur l'élément de boulon d'ancrage intérieur (2, 19) du fait de l'asymétrie des contraintes.

2. Boulon d'ancrage selon la revendication 1, caractérisé en ce qu'il est prévu sur l'élément de boulon d'ancrage intérieur (2, 19) entouré deux surfaces de cône qui se trouvent sur des faces de l'élément de boulon (2, 19) se faisant face dans le sens radial.

3. Boulon d'ancrage selon la revendication 1 ou 2, caractérisé en ce que la saillie de fixation (4, 26) est prévue sur l'élément de boulon intérieure (2, 19) et prend la forme d'une bride (4) destinée à recouvrir un objet à fixer et prévue à l'extrémité postérieure libre du boulon d'ancrage, l'élément de boulon extérieur (5) au nombre d'un au moins s'étendant dans cette bride à travers une ouverture (7).

4. Boulon d'ancrage selon la revendication 1 ou 2, caractérisé en ce que l'élément de boulon intérieur (19) présente un canal de guidage (24) ouvert vers l'extrémité postérieure du boulon d'ancrage et orienté dans le sens longitudinal du boulon d'ancrage, qui entoure une tige d'enfoncement (22) présentant au moins une saillie latérale (23) qui repose sur l'extrémité postérieure d'un élément de boulon extérieur (18) enfoncé.

5. Boulon d'ancrage selon l'une quelconque des revendications 1 à 4, caractérisé en ce qu'il est prévu, à l'extrémité postérieure d'un élément de boulon extérieur (5, 51) devant être enfoncé dans le trou foré pour l'expansion du boulon d'ancrage (1) ou d'une tige d'enfoncement (22), au moins une saillie (9, 62) pouvant être déformée par l'enfoncement.

6. Boulon d'ancrage selon la revendication 1, caractérisé en ce que l'élément de boulon intérieur (55) possède une tête (57) élargie en forme de T, qui s'étend latéralement à travers deux fentes (58, 59) dans l'élément de boulon extérieur (51) se faisant face et limitées vers l'extrémité postérieure du boulon d'ancrage (50) et qui recouvre la bague de maintien (60) entourant les deux éléments de boulon (51, 55).

7. Boulon d'ancrage selon la revendication 6, caractérisé en ce que l'élément de boulon extérieur (51) s'appuie sur la bague de maintien (60) par de petites saillies (61) dans une position de départ avant le début de l'expansion.

8. Boulon d'ancrage selon la revendication 1, caractérisé en ce que l'élément de boulon intérieur (55) se compose d'une pièce d'acier plat découpée à l'emporte-pièce et présente à son extrémité antérieure un corps d'expansion (54) tordu à 90°, conique et asymétrique.

9. Boulon d'ancrage selon la revendication 1, caractérisé en ce que l'élément de boulon intérieur (31) présente sur sa saillie de fixation un filetage (32) et un écrou fileté (33) pouvant être vissé sur celui-ci, l'élément de boulon extérieur (34) entourant l'élément intérieur à la manière d'une manchette, s'appuyant sur une saillie (39) de l'élément de boulon intérieur (31) et présentant des saillies (40-43) en forme de barbelures à l'extérieur.
